# EUROPEAN PATENT SPECIFICATION

(11) **EP 2 385 183 B1**
(45) Date of publication and mention of the grant of the patent: **25.02.2015**
(21) Application number: 11162809.5
(22) Date of filing: 18.04.2011
(51) Int. Cl.: E04D 11/00, A01G 1/00

(54) **Assembly for the provision of a water retention system**
Anordnung für Wasserspeichersystem
Ensemble pour système de rétention d'eau

(30) Priority: 16.04.2010 NL 2004562
(43) Date of publication of application: 09.11.2011
(73) Proprietor: Retent GmbH, 6014 Luzern (CH)
(72) Inventor: Kerkhoven, Peter Maarten, 6871 EG, Renkum (NL); Stok, Michel, 3707 TB, Zeist (NL)
(74) Representative: Nederlandsch Octrooibureau

(56) References cited:
- EP-A2- 1 795 654
- WO-A1-82/00168
- WO-A1-85/03842
- WO-A1-90/14476
- WO-A1-2007/029220
- DE-A1- 19 649 372
- DE-C1- 19 756 132
- DE-U1- 29 904 660
- JP-A- 2003 088 237
- STEINMETZ H E: "DRANUNG ERDUBERSCHUTTETER BAUTEILE", BMK BAUEN MIT KUNSTSTOFFEN, CARL HANSER VERLAG. MUNCHEN, DE, no. 6, 1 November 1989 (1989-11-01), pages 8-14, XP000085775, ISSN: 0934-1773

## Description

The present invention relates to an assembly for the provision of a water retention system for a roof, comprising a water-permeable base fabric, a water-absorbing material layer disposed on that base fabric and a fixing disposed along said material layer.

With the ever-increasing number of buildings covering the earth's surface and the intensification of rainfall, it is necessary to provide drainage systems with a constantly increasing capacity. To limit the associated costs to some extent, it is proposed in the prior art to perform the discharge of water to the water drainage systems such as sewer systems and the downstream systems connected to them as gradually as possible. This means that efforts are made to retain the water for as long as possible and to discharge it gradually.

One method for retaining the water as much as possible is to provide flat roofs with vegetation. The substrate used here, in combination with the plants present there, can retain water and discharge it slowly. However, it is important here to select the correct plants, which do not die off over a lengthy period of drought. Furthermore, it is important that the construction used is capable of withstanding all weather conditions. Particularly in areas with strong prevailing winds, the problem exists that the substrate of a roof which is used blows away, as a result of which the effectiveness of the system is lost and damage possibly occurs from parts blowing around.

A simple solution would be to attach the substrate to the flat roof. However, a requirement which is generally imposed is that the underlying watertight sealing layer may not be perforated.

The construction shown in WO 2007/029220 reveals a flat roof with a watertight layer on which a specially embodied sealing layer is disposed. This is watertight and is attached to the roof. A substrate layer is disposed thereon with vegetation disposed therein. The watertight layer comprises a conventional roof membrane, a protection for this membrane and a root barrier layer disposed thereon. The substrate and the vegetation present therein cannot be prevented from blowing away with this construction.

A vegetation body which is embodied as a mat and can be rolled out in low-water areas is known from WO 85/03842.

WO 2007/029220 shows a roof provided with a layer of growing medium disposed thereon in which vegetation is planted.

WO 82/00168 shows a sloping roof with covering wherein measures have been taken to prevent displacement of the vegetation disposed on the covering.

A flat roof provided with vegetation is known from JP 2003/088237.

This document discloses an assembly according to the preamble of claim 1.

The object of the present invention is to provide a system to be disposed preferably on a flat roof which is simple to dispose, with which water is to be retained in the event of substantial rainfall, which requires little maintenance, can bind material and is fixed in a guaranteed manner in relation to the environment.

This object is achieved by an assembly according to claim 1.

More particularly, the base fabric according to the present invention, in contrast to what is described in the prior art, is not integral with the watertight roof covering layer but is a separate layer of base fabric. By fixing this base fabric in any way in relation to the roof and then attaching the material layer in turn to the base fabric, the material layer can be prevented from blowing away.

The base fabric can be attached in any adjustable manner to the roof construction. One possibility is the construction which is described in WO 2007/029220. This entails attachment to the roof construction layer providing watertightness. Another possibility is the application of a ballast layer which is placed on the fabric. The different possibilities can be combined with one another. The base fabric and the material layer are provided with cooperating attachment means. According to a particular embodiment, preference is given to providing the base fabric with projections which can cooperate with the base layer, for example through perforation into the base layer. If these projections are provided with barb-like ends, locking can take place with the fabric and with filling possibly present within the fabric. Obviously, it is also possible to embody the construction "the other way round", i.e. with projections which protrude from the material layer and are fixed in any way in the fabric. Numerous other possibilities are again also possible here, wherein it is always important according to the invention that the material layer is fixed to the fabric and the fabric is then fixed to the roof construction.

The attachment is in all cases such that upward displacement and sideways displacement are excluded. As a result, there is no risk of blowing away.

According to a particular further embodiment of the invention, the attachment between the base fabric and the water-absorbing material layer is implemented by means of Velcro. This Velcro can either be attached to the fabric (integrated) or to the material layer, or both. Furthermore, it is possible to embody the Velcro as water-permeable so that it acts as the base fabric (part).

According to a further particular embodiment of the present invention, the material layer comprises a composite layer comprising a watertight lower layer and a water-permeable upper layer, between which spacers are disposed. To do this, it is possible for one of the two layers to be provided with studs. More particularly, the watertight lower layer consists of bubble wrap (blister padding).

A drain for excess water is provided here and, if there is no rainfall, a layer of air lies directly over the roof covering which acts as an insulating layer, as a result of which the roof no longer wears a "wet jacket", i.e. an insulating layer of air is located in the space between the studs.

According to a particular embodiment of the invention, the material layer comprises a rooting medium. One example of this is a coir material. Such materials swell up when they absorb water, as a result of which the water retention capacity increases. Through time, they slowly release the water, either via the underlying construction (actual roof covering) or through evaporation. Furthermore, water of this type can be used for the development of any plants. According to another alternative, a material such as artificial grass is used for the material layer. More particularly, an artificial grass type with high water-absorbing properties, such as so-called 3D artificial grass is used.

Furthermore, seed from selected plants which develop particularly well under the conditions prevailing on a roof may be present in the material layer.

According to the invention, the material layer is constructed from a number of units. These units preferably have the shape of a tile, and the material layer is obtained in a simple manner by laying a number of units against one another. Each unit comprises a filling and a covering surrounding the filling. On the underside, this covering is embodied in such a way that the perforation with the projections described above can take place in a simple manner. In all cases, the covering is embodied as water-permeable.

The ballast preferably comprises a number of ballast weights, such as a number of concrete parts, which are laid as an edge around the material layer.

The present invention also relates to a flat roof provided with a watertight roof covering according to the manner described above.

With the present invention, it is possible to provide an existing flat roof with the material layer units described above in a fast and efficient manner. Furthermore, these are disposed in a fixed manner in relation to the base part so that there is no risk of them blowing away. Through time, the units will form a layer with one another, wherein the roots of the vegetation develop and grow from unit to unit. It is possible to use the assembly described above in both existing and new buildings.

The invention will be explained in detail below on the basis of the example embodiments shown in the drawing, in which:
Fig. 1 shows schematically the assembly according to the invention as an example embodiment;
Fig. 2 shows a first step of the construction of the assembly on a flat roof;
Fig. 3 shows schematically the final situation of the roof provided with roof vegetation;
Fig. 4 shows a detail of the roof vegetation in cross-section;
Fig. 5 shows a variant of the embodiment shown in Fig. 1; and
Fig. 6 shows in cross-section a detail of the construction according to Fig. 5 in an assembled condition.

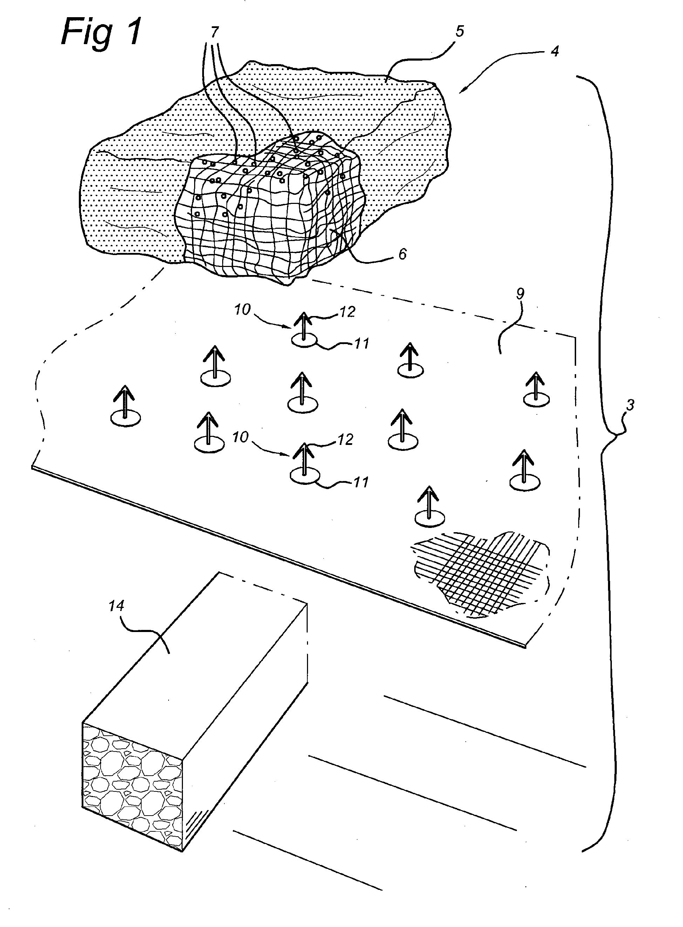

Fig. 1 shows the different parts of the assembly 3 according to the invention for a first embodiment. The assembly 3 consists of layer units 4 which together form the layer 8 to be described below. Each layer unit consists of a filling 6, such as coir material, and seed 7. A water-permeable fabric 5 is disposed around it as a covering. The material of the covering can be perforated from the underside. The material of the covering has an appropriate strength so that, if it is engaged from below, it does not tear when subjected to a removing load, such as a wind load. An example of the material is brushed nylon. This can be supplied in the form of bags which are closed after filling.

Furthermore, the assembly 3 consists of a base fabric 9 which, for example, can be supplied in the form of a roll. This fabric is a root barrier fabric known as such in the prior art which, on the other hand, is water-permeable. However, according to the present invention, this fabric is provided at regular intervals with a large number of projections 10 which are attached at 11 in a firm manner to the fabric. The projections 10 can be provided with barb-like parts 12. Finally, 14 denotes a ballast part which forms part of the assembly 3 according to the invention.

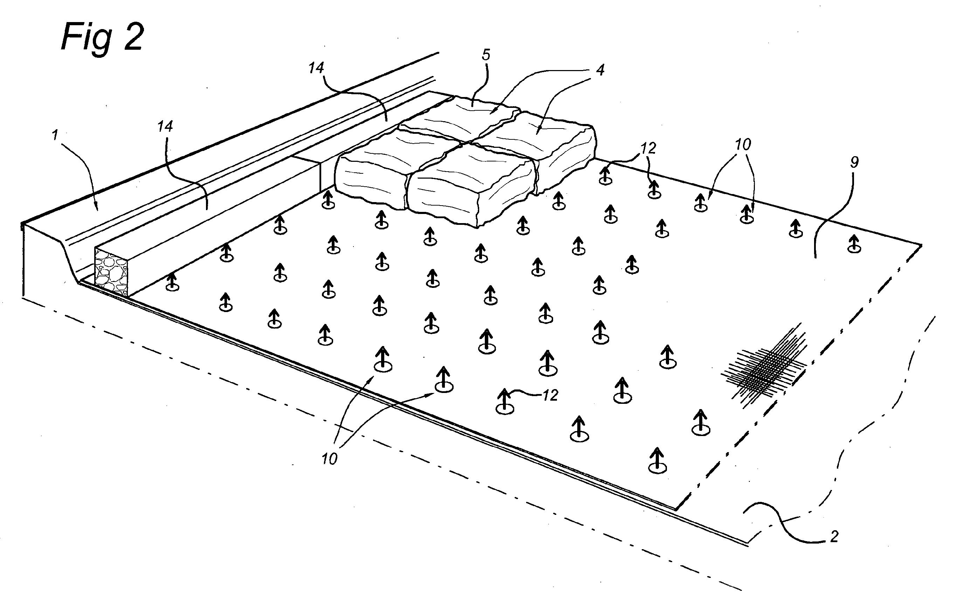

Fig. 2 shows schematically an upper part of a building 1. This is provided in a conventional manner with a roof covering 2 and a partially shown vertical edge.

Fig. 2 shows how the fabric 9 is first rolled out with projections 10 extending upwards. A number of ballast parts 14 are then positioned on the edge of the fabric 9. The units 4 which are positioned on the fabric are then laid against them. Each unit 4 has the form of a tile. Some pressure is exerted on the units 4 when they are laid, so that the barb-like parts 12 perforate the covering 5 on the underside. As a result, locking takes place on the coverings 5 and therefore on the units 4 in relation to the base fabric 9.

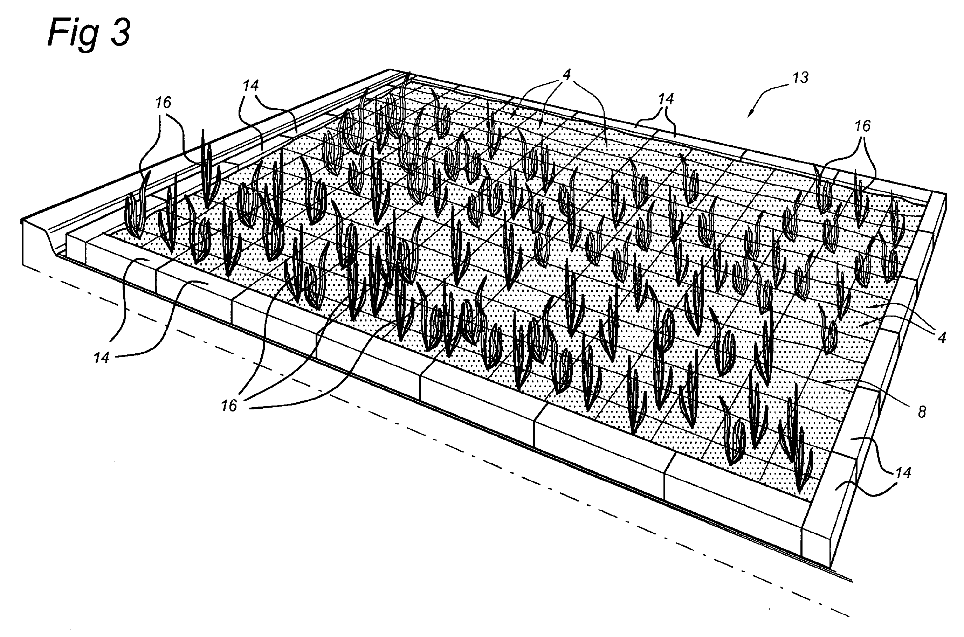

Ultimately, the condition as shown in Figure 3 is attained. The completed ballast construction is indicated in its entirety as 13. The layer comprising various units is indicated as 4.

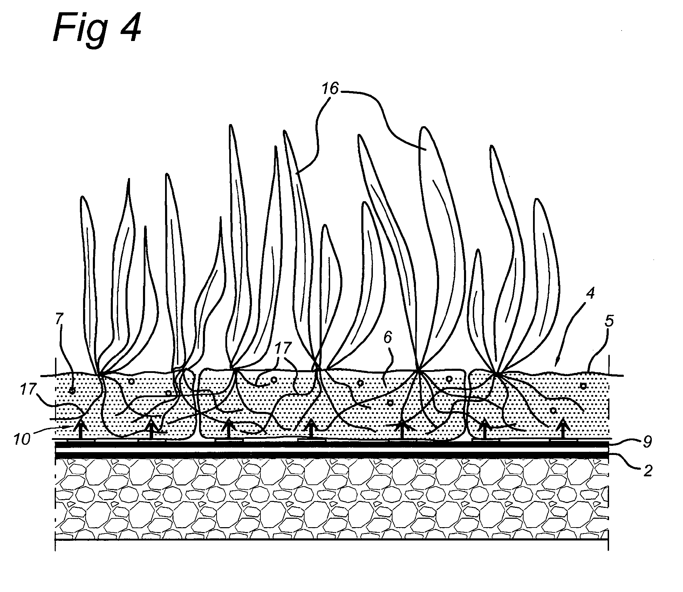

Fig. 4 shows a detail of the construction from Fig. 3. The vegetation which develops from seed 7, but which may also be developed in a different way, is indicated as 16. This vegetation forms roots 17 which grow through from one unit 4 to another unit 4 through the coverings 5. However, the base fabric 9 prevents the root from growing beyond the base fabric between the base fabric 9 and the watertight closure 15 of the roof. The various materials which are used are provided in this way, and can all be materials conceivable in the prior art which meet the desired requirements.

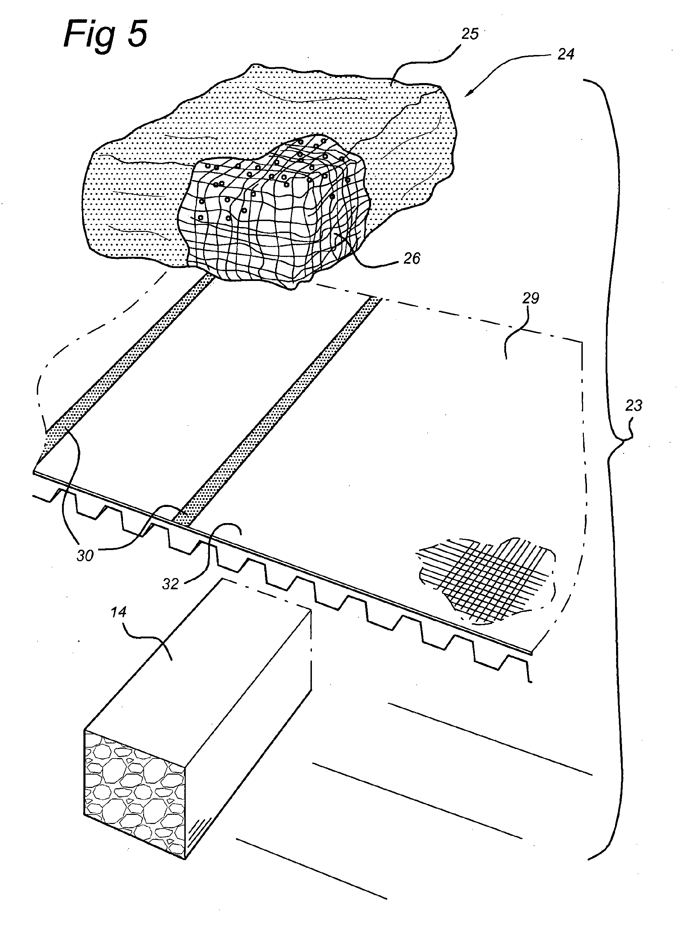

Fig. 5 shows a further embodiment of the invention, wherein the assembly is indicated in its entirety as 23. As in the previous embodiment, the water-absorbing part is constructed from a number of units 24. In this case, the covering 25 is produced from a brushed nylon material and the filling 26 thereof is a coir material.

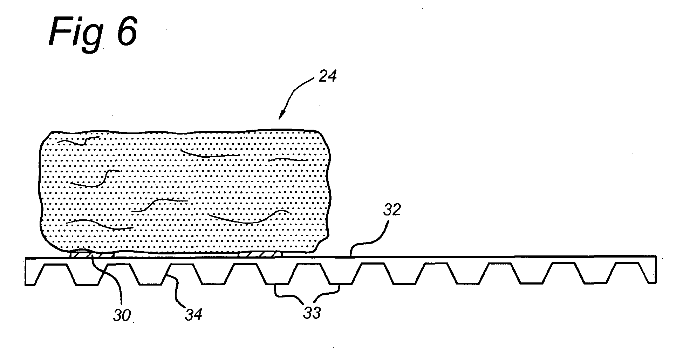

In this example, the base fabric 29 is constituted as will be explained with reference to Fig. 6. The projections 10 previously described are replaced by strips 30 of Velcro material.

Fig. 6 shows the construction according to Fig. 5 in an assembled condition in cross-section, in particular to explain the structure of the base fabric 29. It is evident here that this comprises a water-permeable root-inhibiting upper layer 32. This may, for example, comprise a woven polyethylene fleece. A watertight lower layer 33 is disposed underneath it with pushed out projections 34 therein. These projections carry the upper layer 32.

These projections are embodied in top view as, for example, circular. In any case, the construction is such that the lower-lying parts of the lower layer 33 are interconnected. As a roof is generally sloping, water which cannot be absorbed by the filling 26 will be discharged through the upper layer and will reach the lower layer 33, where it will flow away to a drain. The lower layer 33 is disposed on the roof covering which is already provided, or is integrated therewith. However, the layer 29 is preferably disposed as a single unit. This construction prevents the creation of a cold bridge from the upper surface of the roof (roof covering) to the unit 24.

According to an embodiment which is not shown, the layer 9 can also be replaced by artificial grass. More particularly, this artificial grass is of a type that is capable of absorbing large quantities of water, which it gradually discharges to the drainage system.

The construction described above is particularly simple to install and delivers real results. It is thus possible to allow the water discharge from the roof to take place gradually, as a result of which the drainage systems can be designed with small dimensions. Furthermore, the possibility that less water is discharged into the ground is thereby created.

## Claims

1. Assembly (3, 23) for providing a water retention system for a roof (2), comprising a water-permeable base fabric (9, 29), a water-absorbing material layer (8, 28) disposed on said base fabric and a fixing (13) disposed along said material layer, wherein said base fabric (9, 29) and said material layer (8, 28) are provided with cooperating attachment means (10, 30),
**characterized in that**
said material layer (8, 28) is constructed from material layer units (4, 24) disposed next to one another, and wherein each of said units (4, 24) is provided with these cooperating attachment means (10, 30), and
wherein each of said units (4, 24) comprises a filling (6) and a water-permeable covering (5, 25) disposed around and confining said filling (6), and
wherein said attachment means (10, 30) fix the waterpermeable covering (5, 25) in an upward and sideways direction in relation to the water-permeable base fabric (9, 29).

2. Assembly according to claim 1, wherein the material layer (8, 28) comprises a rooting medium (6).

3. Assembly according to one of the preceding claims, wherein said cooperating attachment means (10) comprise projections attached to that base piece and extending into the material layer (8).

4. Assembly according to one of the preceding claims, wherein the portion of the projections extending into the material layer (8) is provided with a barb-like part (12) which engages the material layer.

5. Assembly according to one of the preceding claims, wherein said cooperating attachment means (30) comprise Velcro (30).

6. Assembly according to one of the preceding claims, wherein the fixing comprises ballast weight (13) disposed along the circumference of the material layer and supported on the base piece.

7. Assembly according to one of the preceding claims, wherein said water-permeable base fabric (9, 29) comprises artificial grass.

8. Assembly according to one of the preceding claims, wherein said base fabric (29) comprises an upper layer (32) and a lower layer (33) spaced therefrom.

9. Assembly according to one of the preceding claims, wherein said upper layer is water-permeable, said lower layer (33) is watertight and spacers (34) are disposed between these layers.

10. Assembly according to claim 9, wherein said lower layer and the spacers comprise a bubble wrap material.

11. Assembly according to claim 6, wherein said ballast weight comprises a number of concrete parts (14).

12. Flat roof (2) comprising a roof construction, a watertight roof covering (15) and an assembly (3) according to one of the preceding claims disposed thereon.

13. Flat roof according to claim 12, wherein plants (16) are present in said material layer, and the roots (17) of said plants extend over two material layer units (4).

14. Flat roof according to one of the preceding claims in combination with claim 9, wherein the area between the spacers is drained.

## Patentansprüche

1. Anordnung (3, 23) zum Bereitstellen eines Wasserspeicherungs-System für ein Dach (2), umfassend ein wasserdurchlässiges Basisgewebe (9, 29), eine über dem Basisgewebe angeordnete wasserabsorbierende Materialschicht (8, 28) und eine entlang der Materialschicht angeordnete Fixierung (13), wobei das Basisgewebe (9, 29) und die Materialschicht (8, 28) mit zusammenwirkenden Befestigungsmitteln (10, 30) versehen sind,
**dadurch gekennzeichnet, dass**
die Materialschicht (8, 28) aus nebeneinander angeordneten Materialschichteinheiten (4, 24) aufgebaut ist, und wobei jede der Einheiten (4, 24) mit diesen zusammenwirkenden Befestigungsmitteln (10, 30) versehen ist,
und
wobei jede der Einheiten (4, 24) eine Füllung (6) und eine um die Füllung (6) herum und diese eingrenzend angeordnete wasserdurchlässige Abdeckung (5, 25) aufweist, und
wobei die Befestigungsmittel (10, 30) die wasserdurchlässige Abdeckung (5, 25) in eine auf das wasserdurchlässige Basisgewebe (9, 29) bezogene seitliche und eine Richtung nach oben fixieren.

2. Anordnung gemäß Anspruch 1, wobei die Materialschicht (8, 28) einen Wurzel-Nährboden (6) umfasst.

3. Anordnung gemäß einer der vorstehenden Ansprüche, wobei die zusammenwirkenden Befestigungsmittel (10) an dem Basisstück befestigte und sich in die Materialschicht (8) erstreckende Vorsprünge umfasst.

4. Anordnung gemäß einem der vorstehenden Ansprüche, wobei der Abschnitt der Vorsprünge, die sich in die Materialschicht (8) erstrecken, mit einem Widerhaken ähnlichen Teil (12) bereitgestellt ist, der in die Materialschicht eingreift.

5. Anordnung gemäß einem der vorstehenden Ansprüche, wobei die zusammenwirkenden Befestigungsmittel (30) Velcro (30) umfassen.

6. Anordnung gemäß einem der vorstehenden Ansprüche, wobei die Fixierung ein entlang des Umfangs der Materialschicht angeordnetes und ein an dem Basisstück gesichertes Ballastgewicht (13) umfasst.

7. Anordnung gemäß einem der vorstehenden Ansprüche, wobei das wasserdurchlässige Basisgewebe (9, 29) künstlichen Rasen umfasst.

8. Anordnung gemäß einem der vorstehenden Ansprüche, wobei das Basisgewebe (29) eine obere Schicht (32) und eine davon beabstandete untere Schicht (33) umfasst.

9. Anordnung gemäß einem der vorstehenden Ansprüche, wobei die obere Schicht wasserdurchlässig ist, die untere Schicht (33) wasserdicht ist und zwischen diesen Schichten Abstandshalter (34) angeordnet sind.

10. Anordnung gemäß Anspruch 9, wobei die untere Schicht und die Abstandshalter ein Luftpolsterfolienmaterial umfassen.

11. Anordnung gemäß Anspruch 6, wobei das Ballastgewicht etliche BetonTeile (14) umfasst.

12. Flachdach (2) umfassend eine Dachkonstruktion, eine wasserdichte Dachabdeckung (15) und eine daran befestigte Anordnung (3) gemäß einem der vorstehenden Ansprüche.

13. Flachdach (2) gemäß Anspruch 12, wobei Pflanzen (16) in der Materialschicht vorhanden sind, und die Wurzeln (17) der Pflanzen sich über zwei Materialschichteinheiten (4) erstrecken.

14. Flachdach gemäß einem der vorstehenden Ansprüche in Kombination mit Anspruch 9, wobei der Bereich zwischen den Abstandshaltern dräniert ist.

## Revendications

1. Ensemble (3, 23) fournir un système de retenue d'eau pour un toit (2), comprenant un tissu de base perméable à l'eau (9, 29), une couche de matériau absorbant l'eau (8, 28) disposée sur le tissu de base et un dispositif de fixation (13) disposé le long de la couche de matériau, dans lequel le tissu de base (9, 29) et la couche de matériau (8, 28) sont munis d'éléments de fixation complémentaires (30),
**caractérisé en ce que**
la couche de matériau (8, 28) est construite à partir d'unités de couche de matériau (4, 24) posées à proximité l'une de l'autre, et dans laquelle chacune des unités (4, 24) est munie de ces éléments de fixation complémentaires (10, 30), et
dans lequel chacune des unités (4, 24) comprend un remplissage (6) et un recouvrement perméable à l'eau (5, 25) disposé autour et confinant le remplissage (6), et
dans lequel les moyens de fixation (10, 30) fixent le recouvrement perméable à l'eau (5, 25) dans une direction vers le haut et latérale par rapport au tissu de base perméable à l'eau (9, 29).

2. Ensemble selon la revendication 1, dans lequel la couche de matériau (8, 28) est constituée d'un milieu d'enracinement (6).

3. Ensemble selon l'une quelconque des revendications précédentes, dans lequel les moyens de fixation complémentaires (10) comprennent des saillies fixées sur cette partie de base et s'étendant dans la couche de matériau (8).

4. Ensemble selon l'une quelconque des revendications précédentes, dans lequel la partie des saillies s'étendant dans la couche de matériau (8) est munie d'une partie analogue à des barbes (12) qui viennent en prise avec la couche de matériau.

5. Ensemble selon l'une quelconque des revendications précédentes, dans lequel les moyens de fixation complémentaires (30) sont constitués de Velcros (30).

6. Ensemble selon l'une quelconque des revendications précédentes, dans lequel la fixation comprend un poids de ballast (13) disposé le long de la circonférence de la couche de matériau et supporté sur la partie de base.

7. Ensemble selon l'une quelconque des revendications précédentes, dans lequel le tissu de base perméable à l'eau (9, 29) est constitué de gazon artificiel.

8. Ensemble selon l'une quelconque des revendications précédentes, dans lequel le tissu de base (29) comprend une couche supérieure (32) et une couche inférieure (33) espacée de celle-ci.

9. Ensemble selon l'une quelconque des revendications précédentes, dans lequel la couche supérieure est perméable à l'eau, la couche inférieure (33) est étanche par rapport à l'eau et des écarteurs (34) sont disposés entre ces couches.

10. Ensemble selon la revendication 9, dans lequel la couche inférieure et les écarteurs sont constitués d'un matériau d'enveloppement à bulles.

11. Ensemble selon la revendication 6, dans lequel le poids de ballast est constitué de plusieurs parties de béton (14).

12. Toit plat (2) comprenant une construction de toit, un recouvrement de toit étanche à l'eau (15) et un ensemble (3) selon l'une quelconque des revendications précédentes posé sur celui-ci.

13. Toit plat selon la revendication 12, dans lequel des plantes (16) sont présentes dans la couche de matériau, et les racines (17) de ces plantes s'étendent sur deux unités de couche de matériau (4).

14. Toit plat selon l'une quelconque des revendications précédentes en combinaison avec la revendication 9, dans lequel la surface entre les écarteurs est drainée.
